(19) **Europäisches Patentamt / European Patent Office / Office européen des brevets**

(11) **EP 4 160 741 B1**

(12) **EUROPEAN PATENT SPECIFICATION**

(45) Date of publication and mention
of the grant of the patent:
**03.06.2026   Bulletin 2026/23**

(51) International Patent Classification (IPC):
**H01M 4/525** (2010.01)    **C01G 53/00** (2025.01)

(21) Application number: **21814361.8**

(52) Cooperative Patent Classification (CPC):
**C01G 53/44; H01M 4/131; H01M 4/366;
H01M 4/485; H01M 4/505; H01M 4/525;
H01M 10/052; H01M 10/0525;** C01P 2004/61;
C01P 2006/40; H01M 2004/021; H01M 2004/028;
Y02E 60/10

(22) Date of filing: **08.04.2021**

(86) International application number:
**PCT/JP2021/014950**

(87) International publication number:
**WO 2021/241027 (02.12.2021 Gazette 2021/48)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

POSITIVELEKTRODENAKTIVMATERIAL FÜR SEKUNDÄRBATTERIEN MIT WASSERFREIEM ELEKTROLYT UND SEKUNDÄRBATTERIE MIT WASSERFREIEM ELEKTROLYT

MATÉRIAU ACTIF D'ÉLECTRODE POSITIVE POUR BATTERIES SECONDAIRES À ÉLECTROLYTE NON AQUEUX, ET BATTERIE SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2020   JP 2020094324**

(43) Date of publication of application:
**05.04.2023   Bulletin 2023/14**

(73) Proprietor: **Panasonic Intellectual Property Management Co., Ltd.
Osaka-shi, Osaka 540-6207 (JP)**

(72) Inventors:
• **TOCHIO, Takaya**
  **Chuo-ku, Osaka-shi, Osaka 540-6207 (JP)**
• **INOUE, Katsuya**
  **Chuo-ku, Osaka-shi, Osaka 540-6207 (JP)**
• **OGASAWARA, Takeshi**
  **Chuo-ku, Osaka-shi, Osaka 540-6207 (JP)**
• **AOKI, Yoshinori**
  **Chuo-ku, Osaka-shi, Osaka 540-6207 (JP)**

(74) Representative: **Novagraaf International SA
Chemin de l'Echo 3
1213 Onex, Geneva (CH)**

(56) References cited:
EP-A1- 3 597 604          WO-A1-2018/179916
CN-A- 111 095 630         CN-B- 105 070 907
JP-A- 2011 082 150        JP-A- 2015 122 299
JP-A- H0 917 430          JP-A- H11 195 416
KR-A- 20190 117 199

• **CUI CHUNYU ET AL: "Structure and Interface Design Enable Stable Li-Rich Cathode", JOURNAL OF THE AMERICAN CHEMICAL SOCIETY, vol. 142, no. 19, 22 April 2020 (2020-04-22), pages 8918 - 8927, XP093099674, DOI: 10.1021/jacs.0c02302**

• **ELECTROCHEMICAL SOCIETY BATTERY TECHNICAL COMMITTEE: "DENCHI HANDBOOK [Battery Handbook]", 30 November 2009, THE ELECTROCHEMICAL SOCIETY OF JAPAN , JP , ISBN: 978-4-274-20805-8, article EDITED BY THE ELECTROCHEMICAL SOCIETY OF JAPAN BATTERY TECHNOLOGY COMMITTEE: "3. Thermal stability and property improvement of LiNiO2", pages: 435 - 436, XP009541063**

**Description**

TECHNICAL FIELD

The present disclosure relates to a positive electrode active material for a non-aqueous electrolyte secondary battery and a non-aqueous electrolyte secondary battery using the positive electrode active material.

BACKGROUND ART

In a non-aqueous electrolyte secondary battery such as a lithium-ion battery, a positive electrode active material significantly affects battery performance such as input-output characteristics, a capacity, cycle characteristics, and storage characteristics. For the positive electrode active material, a lithium-transition metal composite oxide containing metal elements such as Ni, Co, Mn, and Al, and composed of secondary particles each formed by aggregation of primary particles is commonly used. Since the positive electrode active material has significantly different properties depending on its composition, particle shape, and the like, many investigations have been made on various positive electrode active materials.

For example, Patent Literature 1 discloses a positive electrode active material including Li, Ni, Co, Mn, and W, and having an Ni proportion of 30 mol% or more and 60 mol% or less, a Co proportion of 15 mol% or more and 35 mol% or less, an Mn proportion of 15 mol% or more and 35 mol% or less, and a W proportion of more than 0 mol% and 5 mol% or less, wherein W is unevenly distributed on a surface layer of the positive electrode active material. Patent Literature 1 also states that using this positive electrode active material improves output characteristics and cycle characteristics of a battery.

Patent Literature 2 discloses a positive electrode active material having a layered crystalline structure $Li_{1+a}M_{1-a}O_{2\pm b}M'_k S_m$ ($-0.03 < a < 0.06$, $b \cong 0$), M being a transition metal compound, consisting of at least 95% of either one or more elements of the group Ni, Mn, Co, and Ti, M' being a specific element present on the surface of an oxide. Patent Literature 2 states that using this positive electrode active material improves performance as a cathode of a lithium battery.

CITATION LIST

PATENT LITERATURE

PATENT LITERATURE 1: Japanese Unexamined Patent Application Publication No. 2016-91626
PATENT LITERATURE 2: National Publication of International Patent Application No. 2010-535699

CN 105 070 907 B , KR 2019 01177199 A, EP 3 597 604 A1 and CN 111 095 630 A describe positive electrode active materials for a secondary battery, preparation methods thereof, and lithium secondary batteries containing the same.

SUMMARY

A positive electrode active material with a high Ni content contributes to a higher capacity of a battery and the like, but has a problem of considerable lowering of a capacity maintenance rate after storage of the battery. The batteries using the positive electrode active material of Patent Literatures 1 and 2 still have room for improvement in the storage characteristics.

In view of the afore-mentioned problems, a positive electrode active material for a non-aqueous electrolyte secondary battery as defined in Claim 1 is proposed, which includes a lithium-transition metal composite oxide containing 85 mol% or more of Ni based on a total molar amount of metal elements excluding Li, wherein the lithium-transition metal composite oxide is secondary particles each formed by aggregation of primary particles, the lithium-transition metal composite oxide contains at least one metal element M1 selected from the group consisting of Mg, Ti, Nb, Zr, and V in an amount greater than or equal to 0.01 mol% and less than or equal to 3 mol% based on the total molar amount of the metal elements excluding Li, when a thickness range from surfaces to 10 nm of the primary particles is defined as a shell and an inside thereof is defined as a core, a ratio of a concentration of the metal element M1 contained in the shell to a concentration of the metal element M1 contained in the core is 1.01 or more and 20 or less, and at least one metal element M2 selected from the group consisting of Ca and Sr is present on the surfaces of the primary particles in an amount greater than or equal to 0.01 mol% and less than or equal to 1 mol% based on the total molar amount of the metal elements excluding Li.

The invention is as set out in the independent claims, further aspects of the invention are outlined in the dependent claims. Embodiments that do not fall within the scope of the appended claims do not describe part of the invention.

A non-aqueous electrolyte secondary battery according to the present disclosure comprises a positive electrode including the above positive electrode active material, a negative electrode, and a non-aqueous electrolyte.

The non-aqueous electrolyte secondary battery using the positive electrode active material according to the present disclosure has excellent storage characteristics. The positive electrode active material according to the present disclosure, which has a high Ni content, contributes to a higher capacity of the battery, and can sufficiently inhibit lowering of the capacity maintenance rate after storage of the battery.

BRIEF DESCRIPTION OF DRAWING

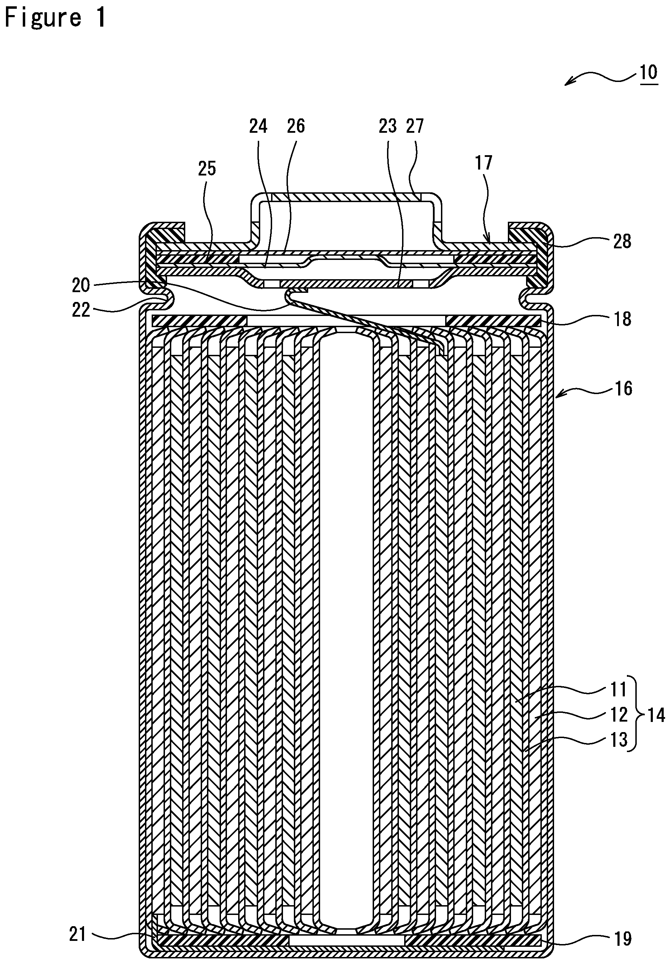

FIG. 1 is a sectional view of a non-aqueous electrolyte secondary battery of an example of an embodiment.

DESCRIPTION OF EMBODIMENTS

As described above, the lithium-transition metal composite oxide with a high Ni content is a useful positive electrode active material that contributes to a higher capacity and higher energy density of a battery. However, in contradiction, there is a problem of large deterioration of the capacity maintenance rate during a storage test.

The present inventors have made intensive investigation to solve this problem, and consequently found that, in a lithium-transition metal composite oxide with a high Ni content, a predetermined amount of at least one metal element M1 selected from the group consisting of Mg, Ti, Nb, Zr, and V forming a solid solution; a ratio of a concentration of the metal element M1 contained in a shell of primary particles to a concentration of the metal element M1 contained in a core thereof being set to 1.01 or more and 20 or less; and a predetermined amount of at least one metal element M2 selected from the group consisting of Ca and Sr adhering onto surfaces of the primary particles remarkably improve the storage characteristics of the battery and specifically inhibit the lowering of the capacity maintenance rate during a storage test.

On the surfaces of the primary particles constituting the positive electrode active material according to the present disclosure, a coating layer including the metal element M2 is uniformly formed. It is considered that this metal element M2 and the metal element M1 contained in the particle surface (shell) at a high concentration are reacted and bonded to uniformly form the strongly bonded coating layer on the surfaces of the primary particles. This is presumed to inhibit oxygen elimination caused by a side reaction between the active material and the electrolyte during a storage test, and to maintain a good crystalline structure of the active material, resulting in the improvement in the storage characteristics.

Hereinafter, an example of embodiments of the positive electrode active material for a non-aqueous electrolyte secondary battery according to the present disclosure and a non-aqueous electrolyte secondary battery using the positive electrode active material will be described in detail with reference to the drawings. It is anticipated from the beginning to selectively combine a plurality of embodiments and modified examples described below.

Hereinafter, a cylindrical battery in which a wound electrode assembly 14 is housed in a bottomed cylindrical exterior housing can 16 will be exemplified, but an exterior of the battery is not limited to a cylindrical exterior housing can, and may be, for example, a rectangular exterior housing can (rectangular battery), a coin-shaped exterior housing can (coin battery), or an exterior composed of laminated sheets including a metal layer and a resin layer (laminate battery). The electrode assembly may be a laminated electrode assembly in which a plurality of positive electrodes and a plurality of negative electrodes are alternately stacked with a separator interposed therebetween.

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially substituted with a halogen atom such as fluorine. For the electrolyte salt, a lithium salt such as $LiPF_6$ is used, for example. The non-aqueous electrolyte is not limited to a liquid electrolyte, and may be a solid electrolyte.

All of the positive electrode 11, negative electrode 12, and separator 13 that constitute the electrode assembly 14 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to, for example, sandwich the positive electrode 11. The electrode assembly 14 has a positive electrode lead 20 connected to the positive electrode 11 by welding or the like, and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a groove 22 in which part of a side wall thereof projects inside for supporting the sealing assembly 17 is formed. The groove 22 is preferably formed in a circular shape along a circumferential direction of the exterior housing can 16, and supports the sealing assembly 17 with the upper surface thereof. The sealing assembly 17 is fixed on the upper part of the exterior housing can 16 with the groove 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts of the vent members 24 and 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, the negative electrode 12, and the separator 13, which constitute the electrode assembly 14, particularly a positive electrode active material constituting the positive electrode 11, will be described in detail.

[Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, the binder, and the like on the positive electrode core, drying and subsequently compressing the applied film to form the positive electrode mixture layers on both the surfaces of the positive electrode core.

Examples of the conductive agent included in the positive electrode mixture layer may include a carbon material such as carbon black, acetylene black, Ketjenblack, and graphite. Examples of the binder included in the positive electrode mixture layer may include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethylcellulose (CMC) or a salt thereof, polyethylene oxide (PEO), and the like may be used in combination.

The positive electrode active material includes a lithium-transition metal composite oxide containing 85 mol% or more of Ni based on the total molar amount of the metal elements excluding Li. As described above, a lithium-transition metal composite oxide with a high Ni content may be used as a useful positive electrode active material that contributes to a higher capacity and higher energy density of a battery. However, there is a problem of large deterioration of the capacity maintenance rate after storage of the battery. In the lithium-transition metal composite oxide constituting the positive electrode active material of the present embodiment, the metal element M1 such as Nb is unevenly distributed on the particle surface and a proximity thereof, and the metal element M2 such as Ca is scatteringly present on the particle surface, resulting in the remarkable improvement in the storage characteristics of the battery.

The positive electrode active material contains the lithium-transition metal composite oxide as a main component. Here, the main component means a component with the largest mass proportion among materials constituting the positive electrode active material. The positive electrode mixture layer may include a composite oxide other than the lithium-transition metal composite oxide within a range not impairing the object of the present disclosure, and a proportion of the lithium-transition metal composite oxide is preferably 50 mass% or more, more preferably 80 mass% or more, and may be substantially 100 mass%. The positive electrode active material may be composed of two or more composite oxides.

The lithium-transition metal composite oxide preferably contains another metal element in addition to Li, Ni, and the metal elements M1 and M2. Examples of the other metal element include Co, Al, Mn, B, Cr, Fe, Cu, Zn, Ga, In, Sn, Ta, and W. Among them, the composite oxide preferably contains at least one selected from the group consisting of Co, Al, and Mn. A content of the metal elements other than Li, Ni, and the metal elements M1 and M2 contained in the lithium-transition metal composite oxide is preferably 15 mol% or less, and more preferably 10 mol% or less, based on the total molar amount of the metal elements excluding Li.

The lithium-transition metal composite oxide preferably contains at least one selected from the group consisting of Al and Mn. In this case, a content of Ni is 90 mol% or more, a content of Al is 7 mol% or less, and a content of Mn is 5 mol% or less, based on the total molar amount of the metal elements excluding Li, for example. A preferable example of the lithium-transition metal composite oxide is a composite oxide containing is substantially free of Co. Since Co is rare and expensive, using no Co can reduce the manufacturing cost of the battery. Co is presumed to be mixed as an impurity, and in this case, the content of Co is less than 0.5 mol%.

The lithium-transition metal composite oxide is secondary particles each formed by aggregation of primary particles. An average particle diameter of the primary particles is, for example, 200 nm or more and 500 nm or less. The average particle diameter of the primary particles is determined by analyzing a scanning electron microscope (SEM) image of a particle cross section observed with an SEM. For example, the positive electrode 11 is embedded into a resin to produce a cross section with cross-section polisher (CP) processing, and this cross section is photographed with the SEM. From the SEM image, 30 primary particles are randomly selected to observe particle boundaries, and each major diameter (the largest major diameter) of the 30 primary particles are determined to specify an average value thereof as the average particle diameter.

A median diameter on a volumetric basis (hereinafter, referred to as "D50") of the secondary particles (lithium-transition metal composite oxide) is, for example, 1 $\mu$m or more and 30 $\mu$m or less, and preferably 5 $\mu$m or more and 20 $\mu$m or less. The D50 means a particle diameter at which a cumulative frequency is 50% from a smaller particle diameter side in a particle size distribution on a volumetric basis. The particle size distribution of the secondary particles may be measured by using a laser diffraction-type particle size distribution measuring device (for example, MT3000II, manufactured by MicrotracBEL Corp.) with water as a dispersion medium.

The lithium-transition metal composite oxide contains at least one metal element M1 selected from the group consisting of Mg, Ti, Nb, Zr, and V in an amount greater than or equal to 0.01 mol% and less than or equal to 3 mol% based on the total molar amount of the metal elements excluding Li. If the content of the metal element M1 is more than 3 mol%, the energy density of the battery tends to be lowered. Although the metal element M1 contributes to the improvement in the storage characteristics even with an extremely small amount compared with a case where no metal element M1 is contained, the content of the metal element M1 is 0.01 mol% or more.

The content of the metal element M1 is preferably 0.05 mol% or more, and more preferably 0.1 mol% or more, based on the total molar amount of the metal elements excluding Li. An upper limit of the content of the metal element M1 is preferably 2.5 mol%, and more preferably 2 mol%. A preferable example of the content of the metal element M1 is 0.05 mol% or more and 2 mol% or less, 0.1 mol% or more and 2 mol% or less, 0.1 mol% or more and 1.5 mol% or less, or 0.1 mol% or more and 1 mol% or less.

The lithium-transition metal composite oxide may contain one element, or may contain two or more elements as the metal element M1. The metal element M1 forms a solid solution with other metal elements such as Li, Ni, and Al. In the lithium-transition metal composite oxide, at least one selected from the group consisting of Ti, Nb, and Zr forms a solid solution, for example. Among them, Nb and Zr are preferable, and Nb is more preferable.

In the lithium-transition metal composite oxide, when a thickness range from surfaces to 10 nm of the primary particles is defined as a shell and an inside thereof is defined as a core, a ratio of a concentration of the metal element M1 contained in the shell to a concentration of the metal element M1 contained in the core (R-M1) is 1.01 or more and 10 or less. That is, the metal element M1 forms a solid solution at a higher concentration on the surface or a proximity thereof of the primary particles of the composite oxide than the inside thereof. The concentration ratio of the metal element M1 (R-M1) is determined by using transmission electron microscope-energy dispersive X-ray spectroscopy (TEM-EDX) to measure an element distribution on cross sections of the primary particles.

When the concentration ratio of the metal element M1 (R-M1) is a value more than 1, a high energy density may be achieved to improve the storage characteristics compared with a case where the ratio is 1 or less. The concentration ratio (R-M1) is preferably 1.5 or more, and more preferably 2 or more. An upper limit of the concentration ratio (R-M1) is preferably 18 or less, and more preferably 15 or less, from the viewpoint of a charge transfer resistance. A preferable example of the concentration ratio (R-M1) is 1.5 or more and 18 or less, 1.5 or more and 15 or less, or 2 or more and 15 or less.

At least one metal element M2 selected from the group consisting of Ca and Sr is present on the surfaces of the primary particles of the lithium-transition metal composite oxide in an amount of greater than or equal to 0.01 mol% and less than or equal to 1 mol% based on the total molar amount of the metal elements excluding Li. If the content of the metal element M2 is more than 1 mol%, the energy density of the battery tends to be lowered. Although the metal element M2 contributes to the improvement in the storage characteristics even with an extremely small amount compared with a case where no metal element M2 is contained, the content of the metal element M2 is 0.01 mol% or more.

The metal element M2 is, for example, scatteringly present evenly on the surface of each primary particle including the surfaces and inside (boundaries of the primary particles) of the secondary particles. That is, it can be mentioned that the surfaces of the primary particles are covered by a coating layer of the metal element M2. This coating layer may contain an element other than the metal element M2 within a range not impairing the object of the present disclosure. When the concentration ratio of the metal element M1 (R-M1) is 1.01 or more and 20 or less, the metal elements M1 and M2 are easily reacted and bonded, and the metal element M2 (coating layer) is strongly bonded onto the surfaces of the primary particles. This is considered to inhibit oxygen elimination caused by the side reaction, leading to improved storage characteristics of the battery.

The metal element M2 does not form a solid solution as the metal element M1, and adheres onto the surfaces of the primary particles. In other words, the metal element M2 is substantially absent inside the primary particles. A content of the metal element M2 is preferably 0.03 mol% or more, and more preferably 0.05 mol% or more, based on the total molar amount of the metal elements excluding Li. An upper limit of the content of the metal element M2 is preferably 0.8 mol%. A preferable example of the content of the metal element M2 is 0.03 mol% or more and 0.8 mol% or less, 0.05 mol% or more and 1 mol% or less, or 0.05 mol% or more and 0.8 mol% or less.

A preferable example of the lithium-transition metal composite oxide is a composite oxide represented by the composition formula $Li_aNi_\beta Co_xAl_yMn_zM1_aM2_bO_2$, wherein $0.9 \leq \alpha \leq 1.2$, $0.85 \leq \beta \leq 0.95$, $0 \leq x \leq 0.05$, $0 < y \leq 0.07$, $0 \leq z \leq 0.05$, $0.0005 \leq a \leq 0.01$, and $0.0005 \leq b \leq 0.01$. As shown in the composition formula, an upper limit of the Ni content is preferably 0.95 mol%, and at least a predetermined amount of Al is preferably added. In this case, the crystalline structure is stabilized to contribute to improvement in the storage characteristics. The contents of the metal elements M1 and M2 may be substantially the same, may be M1 > M2, or may be M1 < M2, and is preferably smaller than the contents of Ni, Co, Al, and Mn.

The lithium-transition metal composite oxide of the present embodiment may be synthesized by, for example: mixing a composite oxide containing Ni, Co, Al, and Mn, a compound containing the metal element M1, such as niobium hydroxide, a compound containing the metal element M2, such as calcium hydroxide, and a lithium compound; and calcining the mixture at a high temperature of a highest reaching temperature of 700°C to 850°C. A holding time at the highest reaching temperature is 1 hour or longer and 10 hours or shorter. Since the metal element M1 such as Nb is easily forms a solid solution with Ni and like, the metal element M1 easily permeates inside the primary particles. On the other hand, since the metal element M2 such as Ca is unlikely to form a solid solution with Ni and the like, the metal element M2 adheres onto the surfaces of the primary particles. The concentration ratio of the metal element M1 (R-M1) tends to decrease with a higher calcining temperature, and tends to increase with a lower calcining temperature, for example. Thus, controlling the calcining temperature may regulate the concentration ratio (R-M1) within a target range.

[Negative Electrode]

The negative electrode 12 has a negative electrode core and a negative electrode mixture layer provided on a surface of the negative electrode core. For the negative electrode core, a foil of a metal stable within a potential range of the negative electrode 12, such as copper, a film in which such a metal is disposed on a surface layer thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material, a conductive agent, the binder, and the like on the surface of the negative electrode core, drying and subsequently compressing the applied film to form the negative electrode mixture layers on both the surfaces of the negative electrode core.

The negative electrode mixture layer includes, for example, a carbon-based active material to reversibly occlude and release lithium ions, as the negative electrode active material. A preferable carbon-based active material is a graphite such as: a natural graphite such as flake graphite, massive graphite, and amorphous graphite; or an artificial graphite such as massive artificial graphite (MAG) and graphitized mesophase-carbon microbead (MCMB). For the negative electrode active material, an Si-based active material composed of at least one of the group consisting of Si and an Si-containing compound may also be used, and the carbon-based active material and the Si-based active material may be used in combination.

For the conductive agent included in the negative electrode mixture layer, a carbon material such as carbon black, acetylene black, Ketjenblack, and graphite may be used similar to that in the positive electrode 11. For the binder included in the negative electrode mixture layer, a fluororesin, PAN, a polyimide, an acrylic resin, a polyolefin, and the like may be used similar to that in the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

[Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, polypropylene, and a copolymer of ethylene and an $\alpha$-olefin, cellulose, and the like are preferable. The separator 13 may have any of a single-layered structure and a multilayered structure. On a surface of the separator 13, a heat-resistant layer including inorganic particles, a heat-resistant layer composed of a highly heat-resistant resin such as an aramid resin, a polyimide, and a polyamideimide, and the like may be formed.

EXAMPLES

Hereinafter, the present disclosure will be further described with Examples, but the present disclosure is not limited to these Examples.

<Example 1>

[Synthesis of Positive Electrode Active Material]

A composite oxide containing Ni, Al, and Mn, niobium hydroxide, calcium hydroxide, and lithium hydroxide were mixed at a predetermined mass ratio. This mixture was heated in an oxygen flow from a room temperature to 650°C at a heating rate of 2.0°C/min, and then calcined from 650°C to 730°C at a heating rate of 0.5°C/min to obtain a calcined product. This calcined product was washed with water, and then dried to obtain a lithium-transition metal composite oxide (positive electrode active material) containing metal elements shown in Table 1. The contents of the metal elements M1 and M2 shown in Table 1 are amounts to be externally added relative to a total content of Ni, Co, Al, and Mn.

The obtained lithium-transition metal composite oxide was secondary particles having a D50 of 12 $\mu$m each formed by aggregation of primary particles having an average particle diameter of 350 nm. It was confirmed that, as a result of measurement of an element distribution on cross sections of the primary particles with TEM-EDX, Nb formed a solid solution in the composite oxide, a ratio of a concentration of Nb contained in a shell (a thickness range from the particle surface to 10 nm) to a concentration of Nb contained in a core (Shell/Core concentration ratio) was 9, and Nb was unevenly distributed on the surfaces of the primary particles. It was also confirmed that, from the measurement results with TEM-EDX, Ca substantially evenly adhered onto the surface of each primary particle including the surfaces and inside of the secondary particles (a coating layer including Ca was formed).

[Production of Positive Electrode]

The above lithium-transition metal composite oxide was used as a positive electrode active material. The positive electrode active material, acetylene black, and polyvinylidene fluoride were mixed at a predetermined solid-content mass ratio, and N-methyl-2-pyrrolidone (NMP) was used as a dispersion medium to prepare a positive electrode mixture slurry. Then, the positive electrode mixture slurry was applied on a positive electrode core made of aluminum foil, the applied film was dried and compressed, and then cut to a predetermined electrode size to obtain a positive electrode.

[Production of Negative Electrode]

A graphite, a dispersion of styrene-butadiene rubber (SBR), and sodium carboxymethylcellulose (CMC-Na) were mixed at a predetermined solid-content mass ratio, and water was used as a dispersion medium to prepare a negative electrode mixture slurry. Then, this negative electrode mixture slurry was applied on both surfaces of a negative electrode core made of copper foil, the applied film was dried and compressed, and then cut to a predetermined electrode size to produce a negative electrode in which negative electrode mixture layers were formed on both the surfaces of the negative electrode core.

[Preparation of Non-Aqueous Electrolyte Liquid]

Ethylene carbonate (EC), ethyl methyl carbonate (EMC), and dimethyl carbonate (DMC) were mixed at a predetermined volume ratio. To this mixed solvent, $LiPF_6$ was added to obtain a non-aqueous electrolyte liquid.

[Production of Test Cell (Non-Aqueous Electrolyte Secondary Battery)]

The above positive electrode to which a positive electrode lead made of aluminum was attached and the above negative electrode to which a negative electrode lead made of nickel was attached were spirally wound with a separator made of polyethylene interposed therebetween, and formed into a flat shape to produce a wound electrode assembly. This electrode assembly was housed in an exterior composed of an aluminum laminate, the above non-aqueous electrolyte liquid was injected thereinto, and an opening of the exterior was then sealed to produce a test cell for evaluation.

[Storage Test]

Under a temperature environment of 25°C, the produced test cell was charged and discharged with one cycle at a current of 0.5 It, a charge termination voltage of 4.2 V, and a discharge termination voltage of 2.5 V to measure a discharge capacity. Then, the test cell was left to stand under a high-temperature environment of 50°C for 45 days in a charged state at 4.2 V. Under a temperature environment of 25°C, the test cell after the storage was discharged at a current of 0.5 It until 2.5 V to measure a discharge capacity.
A capacity maintenance rate after the storage test was calculated with the following formula. Table 1 shows the results.

Capacity Maintenance Rate = (Discharge Capacity after Storage Test/Discharge Capacity before Storage Test) $\times$ 100

<Example 2>

A test cell was produced to perform the storage test in the same manner as in Example 1 except that strontium hydroxide was added instead of calcium hydroxide in the synthesis of the positive electrode active material so as to have contents of the metal elements shown in Table 1.

<Example 3>

A test cell was produced to perform the storage test in the same manner as in Example 1 except that: a composite oxide containing Ni, Co, and Al was added instead of the composite oxide containing Ni, Al, and Mn; and zirconium oxide was added instead of niobium hydroxide, in the synthesis of the positive electrode active material so as to have contents of the metal elements shown in Table 1.

<Example 4>

A test cell was produced to perform the storage test in the same manner as in Example 1 except that a composite oxide containing Ni and Al was added instead of the composite oxide containing Ni, Al, and Mn in the synthesis of the positive electrode active material so as to have contents of the metal elements shown in Table 1.

<Example 5>

A test cell was produced to perform the storage test in the same manner as in Example 4 except that titanium oxide was added instead of niobium hydroxide in the synthesis of the positive electrode active material so as to have contents of the metal elements shown in Table 1. The amounts of Nb and Ti to be added were set to 1:1 at a molar ratio.

<Comparative Example 1>

A test cell was produced to perform the storage test in the same manner as in Example 1 except that neither niobium hydroxide nor calcium hydroxide was added in the synthesis of the positive electrode active material.

<Comparative Example 2>

A test cell was produced to perform the storage test in the same manner as in Example 1 except that no calcium hydroxide was added in the synthesis of the positive electrode active material.

<Comparative Example 3>

A test cell was produced to perform the storage test in the same manner as in Example 1 except that no niobium hydroxide was added in the synthesis of the positive electrode active material.

<Comparative Example 4>

A test cell was produced to perform the storage test in the same manner as in Example 1 except that the highest reaching temperature during the calcination was changed to 780°C so that the Shell/Core concentration ratio was less than 1.01 in the synthesis of the positive electrode active material.

[Table 1]

| | Contents (mol%) of Ni, Co, Al, and Mn | | | | M1 | | | M2 | | Storage test |
|---|---|---|---|---|---|---|---|---|---|---|
| | Ni | Co | Al | Mn | Element | Content (mol%) | Shell/Core concentration ratio | Element | Content (mol%) | Capacity maintenance rate |
| Example 1 | 92 | 0 | 5 | 3 | Nb | 0.2 | 9 | Ca | 0.5 | 84.8% |
| Example 2 | 92 | 0 | 5 | 3 | Nb | 0.2 | 4 | Sr | 0.1 | 82.8% |
| Example 3 | 90 | 4 | 6 | 0 | Zr | 0.1 | 14 | Ca | 0.5 | 85.5% |
| Example 4 | 94 | 0 | 6 | 0 | Nb | 0.2 | 17 | Ca | 0.5 | 83.2% |
| Example 5 | 94 | 0 | 6 | 0 | Nb, Ti | 3 | 12 | Ca | 0.5 | 82.5% |
| Comparative Example 1 | 92 | 0 | 5 | 3 | - | - | - | - | - | 79.7% |
| Comparative Example 2 | 92 | 0 | 5 | 3 | Nb | 0.2 | 13 | - | - | 81.3% |
| Comparative Example 3 | 92 | 0 | 5 | 3 | - | - | | Ca | 0.5 | 82.0% |
| Comparative Example 4 | 92 | 0 | 5 | 3 | Nb | 0.2 | 0.9 | Ca | 0.5 | 81.9% |

As shown in Table 1, all of the test cells of the Examples have a higher capacity maintenance rate after the storage test than the test cells of the Comparative Examples, and have excellent storage characteristics. It is found that, from the results shown in Table 1, the capacity maintenance rate after the storage is considerably deteriorated comparted with the test cell of Example 1 when Ca (the metal element M2) does not adhere onto the surfaces of the primary particles of the lithium-transition metal composite oxide (Comparative Example 2), when Nb (the metal element M1) does not form a solid solution with the composite oxide (Comparative Example 3), when neither the metal element M1 nor M2 is added (Comparative Example 1), and when the Shell/Core concentration ratio of the metal element M1 is 0.9 (Comparative Example 4).

In other words, adding the predetermined amounts of the metal elements M1 and M2 to the composite oxide and the uneven presence of the metal element M1 on the surfaces of the primary particles of the composite oxide specifically improve the storage characteristics of the battery. It is considered that the metal elements M1 and M2 are reacted and bonded to uniformly form the strongly bonded coating layer including the metal element M2 on the surfaces of the primary particles. This is presumed to inhibit oxygen elimination caused by the side reaction between the active material and the electrolyte during storage, and to maintain a good crystalline structure of the active material, resulting in the improvement in the storage characteristics.

<Comparative Example 5>

A test cell was produced to perform the storage test in the same manner as in Example 1 except that the highest reaching temperature during the calcination was changed to 700°C so that the Shell/Core concentration ratio was more than 20 in the synthesis of the positive electrode active material. Under a temperature environment of 25°C, the same test cell was charged at a current of 0.5 It until a charge termination voltage of 4.2 V, and then an alternating-current impedance measurement was performed within a range of 10 mHz to 100 kHz to produce a Cole-Cole plot. From a size of a substantial semicircle appeared in the obtained Cole-Cole plot, a charge transfer resistance of the positive electrode mixture layer was determined. Charge transfer resistance of the positive electrode mixture layer in Examples 1 and 2 was also determined with the same method. Table 2 shows the evaluation results.

[Table 2]

| | Contents (mol%) of Ni, Co, Al, and Mn | | | | M1 | | | M2 | | Charge transfer resistance ($\Omega$) |
|---|---|---|---|---|---|---|---|---|---|---|
| | Ni | Co | Al | Mn | Element | Content (mol%) | Shell/Core concentration ratio | Element | Content (mol%) | |
| Example 1 | 92 | 0 | 5 | 3 | Nb | 0.2 | 9 | Ca | 0.5 | 0.25 |
| Example 2 | 92 | 0 | 5 | 3 | Nb | 0.2 | 4 | Sr | 0.1 | 0.3 |
| Comparative Example 5 | 92 | 0 | 5 | 3 | Nb | 0.2 | 30 | Ca | 0.1 | 0.6 |

The test cell of Comparative Example 5 had a capacity maintenance rate after the storage test similar to that of the test cells of the Examples. However, as shown in Table 2, the test cell of Comparative Example 5 had a considerably higher charge transfer resistance of the positive electrode mixture layer than Examples 1 and 2, and the constitution of Comparative Example 5 is difficult to use practically. That is, only when the Shell/Core concentration ratio of the metal element M1 in the positive electrode active material satisfies the condition of 1.01 or more and 20 or less, the storage characteristics may be improved without impairing other battery performances such as the charge transfer resistance.
Although Nb, Zr, and Ti were used as the metal element M1 in the present Examples, the similar effect of improving the storage characteristics is obtained when Mg or V is used.

REFERENCE SIGNS LIST

10        Non-aqueous electrolyte secondary battery
11        Positive electrode
12        Negative electrode
13        Separator
14        Electrode assembly
16        Exterior housing can
17        Sealing assembly
18, 19    Insulating plate
20        Positive electrode lead
21        Negative electrode lead
22        Groove
23        Internal terminal plate
24        Lower vent member
25        Insulating member
26        Upper vent member
27        Cap
28        Gasket

**Claims**

1.  A positive electrode active material for a non-aqueous electrolyte secondary battery (10), including a lithium-transition metal composite oxide containing 85 mol% or more of Ni based on a total molar amount of metal elements excluding Li, wherein

    the lithium-transition metal composite oxide is secondary particles each formed by aggregation of primary particles,
    the lithium-transition metal composite oxide contains at least one metal element M1 selected from the group consisting of Mg, Ti, Nb, Zr, and V in an amount of greater than or equal to 0.01 mol% and less than or equal to 3 mol% based on the total molar amount of the metal elements excluding Li,
    when a thickness range from surfaces to 10 nm of the primary particles is defined as a shell and an inside thereof is defined as a core, a ratio of a concentration of the metal element M1 contained in the shell to a concentration of the metal element M1 contained in the core is 1.01 or more and 20 or less, and
    at least one metal element M2 selected from the group consisting of Ca and Sr is present on the surfaces of the primary particles in an amount of greater than or equal to 0.01 mol% and less than or equal to 1 mol% based on the total molar amount of the metal elements excluding Li.

2.  The positive electrode active material for a non-aqueous electrolyte secondary battery (10) according to claim 1, wherein

    the lithium-transition metal composite oxide contains at least one selected from the group consisting of Al and Mn, and
    a content of Ni is 90 mol% or more, a content of Al is 7 mol% or less, and a content of Mn is 5 mol% or less, based on the total molar amount of the metal elements excluding Li.

3.  The positive electrode active material for a non-aqueous electrolyte secondary battery (10) according to claim 1 or 2, wherein the lithium-transition metal composite oxide is substantially free of Co.

4.  A non-aqueous electrolyte secondary battery (10), comprising:

    a positive electrode (11) including the positive electrode active material according to any one of claims 1 to 3;
    a negative electrode (12); and
    a non-aqueous electrolyte.

**Patentansprüche**

1.  Positives Elektrodenaktivmaterial für eine Sekundärbatterie mit nichtwässrigem Elektrolyt (10), umfassend ein Lithium-Übergangsmetall-Kompositoxid, das 85 Mol-% oder mehr an Ni enthält, bezogen auf eine Gesamtmolmenge an Metallelementen unter Ausschluss von Li, wobei

    das Lithium-Übergangsmetall-Kompositoxid Sekundärpartikel ist, die jeweils durch Aggregation von Primärpartikeln gebildet werden,
    das Lithium-Übergangsmetall-Kompositoxid mindestens ein Metallelement M1, ausgewählt aus der Gruppe bestehend aus Mg, Ti, Nb, Zr und V, in einer Menge von größer oder gleich 0,01 Mol-% und kleiner oder gleich 3 Mol-%, bezogen auf die Gesamtmolmenge der Metallelemente unter Ausschluss von Li, enthält,
    wenn ein Dickenbereich von der Oberfläche bis 10 nm der Primärpartikel als Schale definiert ist und ein Inneres davon als Kern definiert ist, ein Verhältnis einer Konzentration des Metallelements M1, das in der Schale enthalten ist, zu einer Konzentration des Metallelements M1, das in dem Kern enthalten ist, 1,01 oder mehr und 20 oder weniger beträgt, und
    mindestens ein Metallelement M2, ausgewählt aus der Gruppe bestehend aus Ca und Sr, auf den Oberflächen der Primärpartikel in einer Menge von größer oder gleich 0,01 Mol-% und kleiner oder gleich 1 Mol-%, bezogen auf die Gesamtmolmenge der Metallelemente unter Ausschluss von Li, vorhanden ist.

2.  Positives Elektrodenaktivmaterial für eine Sekundärbatterie mit nichtwässrigem Elektrolyt (10) nach Anspruch 1, wobei

das Lithium-Übergangsmetall-Kompositoxid mindestens ein Element, ausgewählt aus der Gruppe bestehend aus Al und Mn, enthält, und
ein Gehalt an Ni 90 Mol-% oder mehr, ein Gehalt an Al 7 Mol-% oder weniger und ein Gehalt an Mn 5 Mol-% oder weniger beträgt, bezogen auf die Gesamtmolmenge der Metallelemente unter Ausschluss von Li.

3. Positives Elektrodenaktivmaterial für eine Sekundärbatterie mit nichtwässrigem Elektrolyt (10) nach Anspruch 1 oder 2, wobei das Lithium-Übergangsmetall-Kompositoxid im Wesentlichen frei von Co ist.

4. Sekundärbatterie mit nichtwässrigem Elektrolyt (10), umfassend:

eine positive Elektrode (11), die das positive Elektrodenaktivmaterial nach einem der Ansprüche 1 bis 3 umfasst;
eine negative Elektrode (12); und
einen nichtwässrigen Elektrolyten.

## Revendications

1. Matériau actif d'électrode positive pour une batterie secondaire à électrolyte non aqueux (10), comprenant un oxyde composite de métal de transition au lithium contenant 85 mol% ou plus de Ni sur la base d'une quantité molaire totale d'éléments métalliques à l'exclusion de Li, dans lequel

l'oxyde composite de métal de transition au lithium se présente sous la forme de particules secondaires formées chacune par agrégation de particules primaires,
l'oxyde composite de métal de transition au lithium contient au moins un élément métallique M1 choisi parmi Mg, Ti, Nb, Zr et V en une quantité supérieure ou égale à 0,01 mol% et inférieure ou égale à 3 mol% sur la base de la quantité molaire totale des éléments métalliques à l'exclusion de Li,
lorsqu'une plage d'épaisseur allant de la surface à 10 nm des particules primaires est définie comme une coquille et un intérieur de celle-ci est défini comme un cœur, un rapport d'une concentration de l'élément métallique M1 contenu dans la coquille à une concentration de l'élément métallique M1 contenu dans le cœur est de 1,01 ou plus et de 20 ou moins, et
au moins un élément métallique M2 choisi parmi Ca et Sr est présent sur les surfaces des particules primaires en une quantité supérieure ou égale à 0,01 mol% et inférieure ou égale à 1 mol% sur la base de la quantité molaire totale des éléments métalliques à l'exclusion de Li.

2. Matériau actif d'électrode positive pour une batterie secondaire à électrolyte non aqueux (10) selon la revendication 1, dans lequel

l'oxyde composite de métal de transition au lithium contient au moins un élément choisi parmi Al et Mn, et
une teneur en Ni est de 90 mol% ou plus, une teneur en Al est de 7 mol% ou moins, et une teneur en Mn est de 5 mol% ou moins, sur la base de la quantité molaire totale des éléments métalliques à l'exclusion de Li.

3. Matériau actif d'électrode positive pour une batterie secondaire à électrolyte non aqueux (10) selon la revendication 1 ou 2, dans lequel l'oxyde composite de métal de transition au lithium est sensiblement exempt de Co.

4. Batterie secondaire à électrolyte non aqueux (10), comprenant :

une électrode positive (11) incluant le matériau actif d'électrode positive selon l'une quelconque des revendications 1 à 3 ;
une électrode négative (12) ; et
un électrolyte non aqueux.

# Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016091626 A
- WO 2010535699 A
- CN 105070907 B
- KR 201901177199 A
- EP 3597604 A1
- CN 111095630 A